# EUROPEAN PATENT APPLICATION

(11) **EP 0 889 105 A2**
(43) Date of publication of application: **07.01.1999**
(21) Application number: 98112116.3
(22) Date of filing: 01.07.1998
(51) Int. Cl.: C09J 7/02, C09J 5/02

(54) **Kit of parts comprising a pressure-sensitive adhesive tape and a primer**

(30) Priority: 01.07.1997 US 886756
(71) Applicant: MINNESOTA MINING AND MANUFACTURING COMPANY, St. Paul, Minnesota 55133-3427 (US)
(72) Inventor: Hitschmann, Guido, PO Box 33427, Saint Paul, MN 55133-3427 (US); Weinert, Silke, PO Box 33427, Saint Paul, MN 55133-3427 (US); Bennett, Gregg, PO Box 33427, Saint Paul, MN 55133-3427 (US); Lamon, Alain, PO Box 33427, Saint Paul, MN 55133-3427 (US); Geiss, Paul Ludwig, PO Box 33427, Saint Paul, MN 55133-3427 (US)
(74) Representative: Meyers, Hans-Wilhelm, Dr.Dipl.-Chem.

(57) **Abstract**

A kit of parts comprising a structural hybrid pressure-sensitive adhesive tape and a primer, the structural hybrid pressure-sensitive adhesive tape comprising at least one structural hybrid pressure-sensitive adhesive layer with at least one exposed surface and, optionally, a backing. The structural hybrid pressure-sensitive adhesive comprises a thermosettable polymer component, a thermoplastic polymer component, and an effective amount of a heat-activatable hardener component and/or a photoinitiator component to cure the thermosettable polymer component. The primer comprises one or more silane, titanate, aluminum and/or zircoaluminate coupling agents which are optionally dissolved in a volatile inert organic solvent. Primer compositions and methods for preparing assemblies having two substrates are also disclosed.

## Description

### Field of the Invention

The present invention relates to a kit of parts comprising a structural hybrid pressure-sensitive adhesive tape and a primer which is useful for bonding a substrate to a surface and, in particular, to a high energy surface. The invention furthermore relates to a structural hybrid pressure-sensitive adhesive tape comprising at least one structural hybrid pressure-sensitive adhesive layer with an exposed surface bearing a primer layer. The invention furthermore refers to a method for preparing an assembly using a kit of parts or a structural hybrid pressure-sensitive adhesive tape bearing a primer layer, respectively, and to assemblies which are obtainable by such methods.

### Background of the Invention

Structural hybrid pressure-sensitive adhesive tapes the structural hybrid pressure-sensitive adhesive of which comprises a thermosettable polymer component, a thermoplastic polymer component, and an effective amount of a heat-activatable hardener component are described, for example, in U.S. Patent No. 5,086,088. The tapes can be obtained, for example, by coating a premix comprising from about 30% to about 80% by weight of a photopolymerizable prepolymeric or monomeric syrup containing an acrylic ester and a polar copolymerizable monomer, from about 20% to about 60% by weight of an epoxy resin or a mixture of epoxy resins containing no photopolymerizable groups, from about 0.5% to about 10% by weight of a heat-activatable hardener for crosslinking the epoxy resin, from about 0.01% to about 5% of a photoinitiator, and from 0% to about 5% of a photocrosslinking agent, onto a flexible carrier web such as a silicone release liner. The photoactive acrylate component including the photocrosslinking agent is subsequently UV-cured to yield a structural hybrid pressure-sensitive adhesive tape with a thermoplastic polyacrylate component and a thermosettable epoxy component. The structural hybrid pressure-sensitive adhesive tape of US '088 can be crosslinked upon exposure to temperatures of, for example, 170°C to allow for high bonding strengths.

European Patent Publication No. 0,620,259 discloses optionally tacky structural hybrid hot melt films which comprise, for example, a thermosettable epoxy component, a thermoplastic polyester component, a photoinitiator for cationically curing the epoxy component and optionally a hydroxyl-containing material.

International Patent Publication No. WO 96/21704 describes a colored, structural hybrid pressure-sensitive adhesive and a structural hybrid pressure-sensitive adhesive tape comprising the product of the photopolymerization of the following materials:
a) a monomer mixture or a partially prepolymerized syrup of at least one acrylic ester of an alkyl alcohol and at least one copolymerizable monomer,
b) an epoxy resin or a mixture of epoxy resins,
c) a heat-activatable hardener for the epoxy resin or mixture of epoxy resins.
d) a photoinitiator, and
e) a pigment.

The acrylic monomeric or partially prepolymerized mixture is preferably polymerized by radiation. In a preferred embodiment, the adhesive includes an organofunctional alkoxy- or halosilane having the following organic functionality: vinyl, halogen, epoxy, acrylate, methacrylate, amine, mercapto, styryl or ureido. The silanes serve to alter the modulus or stiffness of the adhesive as well as the color shade of the tape after heat-activated crosslinking.

The optional incorporation of a silane coupling agent into the bulk of an anisotropically conductive, structural hybrid adhesive composition comprising a) a cationically polymerizable monomer such as a glycidyl epoxy resin, b) a thermoplastic resin, c) optionally, an alcohol containing material, d) a thermally initiated catalyst system, and e) conductive particles, is also proposed in U.S. Patent No. 5,362,421 in case the substrate surface is glass, an oxide or any other surface that would benefit from the addition of a coupling agent.

U.S. Patent No. 5,475,956 describes a vehicle panel assembly comprising a window panel and an attachment member which can be adhered to the panel by using a thermosetting structural adhesive such as a non-tacky modified epoxy in film form. If desired, adhesion promoters such as silane coupling agent and primers formulated thereof can be applied to, or otherwise contacted with, the panel surface, insert, and/or adhesive by wiping, spraying, incorporation in the adhesive, or any other suitable application or variation thereof.

Structural hybrid pressure-sensitive adhesive tapes allow for the preparation of assemblies which are obtainable by sandwiching the tape between two substrates such as, for example, glass or metal substrates with subsequent thermosetting or crosslinking of the structural hybrid pressure-sensitive adhesive tape. Such assemblies are often characterized by desirable mechanical properties such as high values of overlap shear strength or impact strength. It was, however, observed that the weathering resistance of such assemblies does not always meet all practical requirements and that, in particular, the mechanical properties of such assemblies may deteriorate on exposure to water or humidity.

Therefore there was a need for improving the outdoor-applicability of structural hybrid pressure-sensitive adhesive tapes and the weather resistance of assemblies comprising structural hybrid pressure-sensitive adhesive tapes without adversely affecting other properties of the crosslinkable or crosslinked structural hybrid pressure-sensitive adhesive, respectively, such as, for example, uncured or cured peel adhesion, respectively, or without adversely affecting such properties to a degree which is unacceptable for various applications

### Brief Description of the Invention

The present invention refers to a kit of parts comprising a structural hybrid pressure-sensitive adhesive tape and a primer. The structural hybrid pressure-sensitive adhesive tape comprises at least one structural hybrid pressure-sensitive adhesive layer with at least one exposed surface and, optionally, a backing. The structural hybrid pressure sensitive adhesive comprises a thermosettable polymer component, a thermoplastic polymer component, and an effective amount of a heat-activatable hardener component and/or a photoinitiator component to crosslink the thermosettable polymer component. The primer comprises one or more silane, titanate, aluminum and/or zircoaluminate coupling agents which are optionally dissolved in a volatile inert organic solvent.

The present invention furthermore refers to a structural hybrid pressure-sensitive adhesive tape comprising at least one structural hybrid pressure-sensitive adhesive layer with at least one exposed surface and, optionally, a backing, and a primer layer adhered to the exposed surface which tape can be obtained by applying the primer composition of the kit of parts to the crosslinkable pressure-sensitive adhesive tape contained therein.

The present invention furthermore relates to a primer composition comprising
(i) 5 - 85% by weight, preferably 10 - 70% by weight, of one or more silane, titanate, aluminum and/or zircoaluminate coupling agents, and
(ii) 95% - 15% by weight, preferably 90 - 30% by weight, of one or more film-forming phenoxy resins having a molecular weight (number average) of 20,000 or more,
   whereby the percentages refer to the sum of components (i) and (ii) and add up to 100% by weight, and
(iii) a volatile inert organic solvent component.

The present invention is also directed to methods for preparing assemblies comprising two substrates and a crosslinked structural hybrid pressure-sensitive adhesive tape sandwiched between the substrates, whereby at least one of the substrates exhibits a primed surface layer or is in contact with a primer layer attached to the structural hybrid pressure-sensitive adhesive tape.

### Detailed Description of the Preferred Embodiments

Above and below the term structural hybrid pressure-sensitive adhesive refers to adhesives comprising a thermosettable polymer component, a thermoplastic polymer component, and an effective amount of heat-activatable hardener component and/or a photoinitiator component, wherein said adhesive exhibits
(i) a 90° peel adhesion from polished stainless steel as measured according to ISO 8510-1 using a test speed of 300 mm/min, of at least 3 N/1.27 cm, more preferably of at least 5 N/1.27 cm, and
(ii) a latent crosslinkability, i.e. can be transferred to a thermoset by exposing it to heat and/or actinic radiation, said thermoset adhesive subsequently having a tensile strength as measured according to ISO 1184 using a test speed of 2 mm/min, of at least 2 N/mm², more preferably of at least 5 N/mm².

Structural hybrid pressure-sensitive adhesive tapes can be easily applied and positioned on a surface and once applied, they can be thermoset to give a structural bond, i.e., a bond of a high mechanical strength, reflected, for example, in a high overlap shear strength of typically at least 5 N/mm² and, more preferably, of at least 7 N/mm² as measured accordingly to the test method described below.

The structural hybrid pressure-sensitive adhesive tape contained in the kit of parts according to the present invention comprises at least one exposed layer of a structural hybrid pressure-sensitive adhesive comprising a thermosettable polymer component, a thermoplastic polymer component, and an effective amount of a heat-activatable hardener component and/or a photoinitiator component to crosslink the thermosettable polymer component.

The thermosettable polymer component may be based on one or more epoxy resins. Such compounds, broadly called epoxides, include monomeric epoxy compounds and epoxides of the polymeric type and can be aliphatic, cycloaliphatic, aromatic or heterocyclic. Monomeric and oligomeric epoxy compounds preferably have at least two or more, preferably two to four, polymerizable epoxy groups per molecule. In polymeric type epoxides or epoxy resins, there may be many pendent epoxy groups (e.g., a glycidyl methacrylate polymer could have several thousand pendent epoxy groups per average molecular weight). Oligomeric epoxides and, in particular, polymeric epoxy resins are preferred.

The molecular weight of the epoxy-containing materials may vary from low molecular weight monomeric or oligomeric materials with a molecular weight, e.g., from about 100 to polymeric resins with a molecular weight of about 50,000 or more and may vary greatly in the nature of their backbone and substituent groups. For example, the backbone may be of any type, and substituent groups thereon can be any group not having a nucleophilic group or electrophilic group (such as an active hydrogen atom) which is reactive with an oxirane ring. Illustrative of permissible substituent groups are halogens, ester groups, ethers, sulfonate groups, siloxane groups, nitro groups, amide groups, nitrile groups, phosphate groups, etc. Mixtures of various epoxy-containing compounds can also be used in the epoxy component. The epoxy component preferably comprises a mixture of two or more epoxy resins in order to modify and adapt the mechanical properties of the crosslinked structural hybrid pressure-sensitive adhesive with respect to specific requirements.

The term "epoxy resin" is used herein to mean any of monomeric, dimeric, oligomeric or polymeric epoxy materials containing a plurality, i.e. at least 2, of epoxy functional groups. Types of epoxy resins that can be used include, for example, the reaction product of bisphenol A and epichlorohydrin, the reaction product of phenol and formaldehyde (novolac resin) and epichlorohydrin, peracid epoxies, glycidyl esters, the reaction product of epichlorohydrin and p-amino phenol, the reaction product of epichlorohydrin and glyoxal tetraphenol and the like.

Suitable commercially available diglycidic ethers of bisphenol-A are Ciba Geigy Araldite™ 6010, Dow Chemical DER™ 331, and Shell Chemical Epon™ 825, 828, 826, 830, 834, 836, 1001, 1004, 1007, etc.

A polyepoxidized phenol formaldehyde novolac prepolymer is available from Dow Chemical as DEN™ 431 and 438, and from Ciba Geigy as CY-281™. A polyepoxidized cresol formaldehyde novolac prepolymer is available from Ciba Geigy as ECN™ 1285, 1280 and 1299.

A polyglycidyl ether of polyhydric alcohol is available from Ciba Geigy, based on butane-1,4-diol, as Araldite™ RD-2; and from Shell Chemical Corporation based on glycerine, as Epon™ 812.

Suitable commercially available flexible epoxy resins include polyglycol diepoxies, DER™ 732 and 736, from Dow Chemical Company, diglycidyl ester of linoleic dimer acid, Epon™ 871 and 872 from Shell Chemical Company, diglycidyl ester of a bisphenol which the aromatic rings are linked by a long aliphatic chain, Lekutherm™ X-80, from Mobay Chemical Company, epoxidized synthetic rubber materials which are available from Shell Chemical Corporation and epoxidized natural rubber materials such as ENR-10, ENR-25 and ENR-50 which are available from the Rubber Research Institute of Malaysia. The ENR materials are described in Encyclopedia of Polymer Science Engineering, New York 1988, vol. 14, p. 769.

Difunctional epoxy resins which can be used include, for example, a solid resin, N,N,N',N',-tetraglycidyl-a,A'-bis(4-aminophenyl)-p-diisopropylbenzene, HPT™ 1071 from Shell Company, solid diglycidyl ether of bisphenol-9-fluorene, HPT™ 1079 from Shell Chemical Company, and triglycidylether of paraaminophenol, Araldite™ 0500/0510 from Ciba-Geigy Corporation.

High functional epoxy resins (i.e. functionality greater than 2) which can be used include, for example, a solid epoxy novolac resin, DEN™ 485 from Dow Chemical Company, a tetrafunctional solid epoxy resin, Epon™ 1031 from Shell Chemical Company, and N,N,N',N'-tetraglycidyl-4,4'-methylenebisbenzenamine, Araldite™ MY 720 from Ciba Corporation.

Useful cycloaliphatic epoxy resins include, for example, vinylcyclohexane dioxide which is commercially available as ERL-4206 from Union Carbide Corp., 3,4-epoxycyclohexylmethyl-3,4-epoxycyclohexane carboxylate commercially available as ERL-421 from Union Carbide Corp., 3,4-epoxy-6-methylcyclohexylmethyl-3,4-epoxy-6-methylcyclo hexane carboxylate commercially available as ERL-4201 from Union Carbide Corp., bis(3,4-epoxy-6-methylcyclohexylmethyl)adipate commercially available as ERL-4289 from Union Carbide Corp. or bis(2,3-epoxycyclopentyl)ether commercially available as ERL-0400 from Union Carbide Corp.

The thermoplastic polymer component preferably comprises, for example, one or more polyester compounds which may be hydroxyl or carboxyl terminated and include both amorphous and semicrystalline materials. Hydroxyl terminated materials are preferred. By "amorphous" is meant a material that displays a glass transition temperature but does not display a measurable crystalline melting point by differential scanning calorimetry (DSC). Preferably the glass transition temperature is less than the decomposition temperature of any of the compounds of the heat-activatable hardener component and photoinitiator component, but without being more than about 120°C. By "semicrystalline" is meant a polyester component that displays a crystalline melting point by DSC, preferably with a maximum melting point of about 150°C.

Polyester compounds useful in the present invention comprise the reaction product of dicarboxylic acids (or their diester derivatives) and diols. The diacids (or their diester derivatives) can be saturated aliphatic acids containing from 4 to 12 carbon atoms (including unbranched, branched, or cyclic materials having 5 to 6 atoms in a ring) and/or aromatic acids containing from 8 to 15 carbon atoms. Examples of suitable aliphatic acids are succinic, glutaric, adipic, pimelic, suberic, azelaic, sebacic, 1,12 dodecanedioic, 1,4-cyclohexanedicarboxylic, 1,3-cyclopentanedicarboxylic, 2-methylsuccinic, 2-methylpentanedioic, 3-methylhexanedioic acids and the like. Suitable aromatic acids include terephthalic acid, isophthalic acid, pthalic acid, 4,4'benzophenone dicarboxylic acid, 4,4'-diphenylmethanedicarboxylic acid, 4,4'-diphenylether dicarboxylic acid, 4,4'diphenylthioether dicarboxylic acid and 4,4'-diphenylamine dicarboxylic acids. Preferably the structure between the carboxyl groups in these diacids contains only carbon and hydrogen, more preferably it is a phenylene group. Blends of any of the foregoing diacids may be used.

The diols include branched, unbranched, and cyclic aliphatic diols having from 2 to 12 carbons atoms, such as, for example, ethylene glycol, 1,3-propylene glycol, 1,2-propylene glycol, 1,4-butanediol, 1,3-butanediol, 1,5-pentanediol, 2-methyl-2,4-pentanediol, 1,6-hexanediol, 1,8-octanediol, cyclobutane-1,3-di(2-ethanol), cyclohexane-1,4-dimethanol, 1-10-decanediol, 1,12-dodecanediol, and neopentyl glycol. Long chains diols including poly(oxyalkylene) glycols in which the alkylene group contains from 2 to 9 carbon atoms (preferably 2 to 4 carbon atoms) may also be used. Blends of any of the foregoing diols may be used.

Useful, commercially available hydroxyl terminated polyester materials include various saturated, linear, semicrystalline copolyesters available from Hüls America, Inc. such as DYNAPOL S1402, DYNAPOL S1358, DYNAPOL S1227, DYNAPOL S1229 and DYNAPOL S1401. Useful saturated, linear amorphous copolyesters available from Hüls America, Inc. include DYNAPOL S1313 and DYNAPOL S1430.

In another embodiment, the thermoplastic polymer component, is preferably based on one or more polyacrylate compounds which can be obtained, for example, by photopolymerizing a monomeric or prepolymeric mixture of acrylic monomers containing at least one acrylic ester and at least one polar copolymerizable polar monomer as is described in U.S. Patent No. 5,086,088. Thermoplastic polyacrylate compounds which are useful in the present invention are also described, for example, in International Patent Publication No. WO 95/13,328.

The compounds enumerated above which are useful in the thermosettable or thermoplastic, respectively, polymer component of the structural hybrid pressure-sensitive adhesive are to illustrate the invention without limiting it.

The structural hybrid pressure-sensitive adhesive used in the present invention furthermore comprises a heat-activatable hardener component and/or a photoinitiator component which comprise an effective amount of one or more heat-activatable hardener compounds and/or one or more photoinitiator compounds, respectively, to effect crosslinking of the thermosettable component.

Suitable heat-activatable hardener compounds include polycarboxylic acid anhydrides, dicyandiamide, complexes of amines, such as ethylamine and trimethylamine with boron trifluoride or boron trichloride, aromatic polyamines such as bis(p-aminophenyl)methane, and imidazoles such as 2-ethyl-4-methylimidazole and 2-phenylimidazole. It is also possible to use latent heat-activatable hardener compounds. The term "latent" means that the initiator component is essentially unreactive at room temperature but rapidly reacts to effect curing once the onset temperature of the epoxy reaction has been exceeded. Latency of the hardener compounds is preferably based on solvent effects and the activity of the hardener compounds can be controlled, for example, by crystallinity, solubility or encapsulation. Crystalline hardener compounds are commercially available, for example, as Ancamine™ A 2337 X S and A 2014 G from Air Products, Manchester, U.K. An example of an encapsulated hardener compound is HX 938 which is commercially available from Ciba Geigy Corp.

When using a heat-activatable hardener component it may be advantageous to add one or more accelerators to the heat-activatable hardener component in order to crosslink the structural hybrid pressure-sensitive adhesive tape at lower temperatures and/or shorter times. Preferred accelerator compounds include imidazoles such as, for example, 2,4-diamino-6-(2'-methyl-imidazoyl)-ethyl-s-triazine isocyanurate, 2-phenyl-4-benzyl-5-hydroxymethylimidazole or Ni-imidazolephthalate.

Suitable photoinitiators include initiators effecting cationic polymerization such as metallocene salts and aromatic onium salts.

Suitable salts of organometallic complex cations (or metallocene salts) include but are not limited to, those salts having the following formula (I) 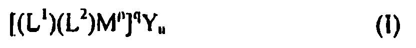 wherein, M^{p} represents a metal ion selected from the group consisting of Cr, Mo, W, Mn Re, Fe, and Co with p denoting the charge of the metal ion; L¹ represents 1 or 2 ligands contributing pi-electrons that can be the same or different ligand selected from the group of substituted and unsubstituted η³-allyl, η⁵-cyclopentadienyl, and η⁷-cycloheptatrienyl, and η⁶-aromatic compounds selected from η⁶-benzene and substituted η⁶-benzene compounds and compounds having 2 to 4 fused rings, each capable of contributing 3 to 8 pi-electrons to the valence shell of M^{p}; L² represents none, or 1 to 3 ligands contributing an even number of sigma-electrons that can be the same or different ligand selected from the group of carbon monoxide, nitrosonium, triphenyl phosphine, triphenyl stibine and derivatives of phosphorous, arsenic and antimony, with the proviso that the total electronic charge contributed to M^{p} results in a net residual positive charge of q to the complex; q is an integer having a value of 1 or 2, the residual charge of the complex cation ; Y is halogen-containing complex anion selected from 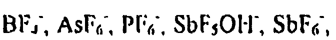 and 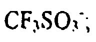 and n is an integer having a value of 1 and 2, the number of complex anions required to neutralize the charge q on the complex cation.

Metallocene salts of formula (I) are described, for example, in U.S. Patent No. 5,089,536, U.S. Patent No. 5,059,701 and European Patent Publication No. 0,109,851.

Also preferred are aromatic onium salts which are disclosed, for example in U.S. Pat. Nos. 4,069,054, 4,231,951 and 4,250,203. Such salts can be described by the formula:

AX (II)

wherein A is an organic cation selected from those described in U.S. Pat. Nos. 3,708,296, 3,729,313, 3,741,769, 3,794,576, 3,808,006, 4,026,705, 4,058,401, 4,069,055, 4,101,513, 4,216,288, 4,394,403, and 4,623,676, X is an anion where X is defined as Y in formula (I) above.

A is preferably selected from diazonium, iodonium, and sulfonium cations and more preferably from diphenyliodonium, triphenylsulfonium and phenylthiophenyl diphenylsulfonium. X preferably is selected from the group of anions consisting of

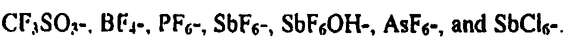

Aromatic iodonium salts and aromatic sulfonium salts are preferred. Especially preferred aromatic iodonium and aromatic sulfonium salts are described in European Patent Publication No. 0,620,259, p. 5, ln. 17 to p. 6, ln. 29.

Useful commercially available cationic photoinitiators include FX-512, an aromatic sulfonium complex salt (3M Company), UVI-6974, an aromatic sulfonium complex salt (Union Carbide Corp.), and IRGACURE 261, a metallocene complex salt (Ciba-Geigy).

If a photoinitiator component is used to effect crosslinking, it comprises between 0.001 - 5 % by weight and more preferably between 0.1 - 2 % by weight with respect to the total mass of the pressure-sensitive adhesive. The photoinitiator component preferably comprises 1-3 and, more preferably, 1 photoinitiator compound.

If a heat-activatable hardener component is used to effect crosslinking, it comprises between 2 - 50 % by weight and more preferably between 3 - 45 % with respect to the total mass of the pressure-sensitive adhesive of one or more, preferably 1-3 hardener compounds.

The structural hybrid pressure-sensitive adhesive may additionally comprise various fillers, adjuvants, additives and the like such as silica, glass, clay, talc, pigments, colorants, glass beads or bubbles, glass or ceramic fibers, antioxidants, flame retardants and the like so as to reduce the weight or cost of the composition, adjust viscosity, and provide additional reinforcement. Fillers and the like which are capable of absorbing the radiation used during the curing process(es) should be used in an amount that does not adversely affect the curing process. The amount of such additives may be between 0-50 wt.% and more preferably 0-15 wt.% with respect to the total mass of the structural hybrid pressure-sensitive adhesive.

The structural hybrid pressure-sensitive adhesive tapes used in the kit of parts of the present invention can be obtained by various methods.

In the case of acrylate/epoxy based systems it is preferred that the epoxy component and a heat-activatable hardener component is dissolved in a monomeric or partly prepolymerized precursor of the acrylate component. This mixture preferably additionally comprised one or more photoinitiator compounds and, in particular, radical photoinitiator compounds, such as 2,2-dimethoxy-1,2-diphenylethane-1-one (commercially available as Irgacure™ 651 from Ciba Geigy) to effect polymerization of the acrylate compound. In the case of acrylate/epoxy systems it is often preferred to use a heat-activatable hardener component for crosslinking the epoxy component which can be included into the above solution or mixture of the epoxy component with the monomeric or prepolymeric acrylate syrup without interfering with the subsequent photopolymerization of the acrylate precursor. It is, however, also possible to incorporate a photoinitiator component for crosslinking of the epoxy component into the mixture of the polymerized acrylate component and the epoxy component after the polymerization of the acrylate component has been effected. Further details on the preparation of acrylate/epoxy based systems can be taken, for example, from U.S. Patent No. 5,086,088 and International Patent Publication No. WO 95/13,328.

In the case of polyester/epoxy based systems, a photoinitiator component is usually preferred for crosslinking the epoxy component over a heat-activatable hardener component because the pressure-sensitive adhesive is preferably obtained by dissolving the epoxy component and the photoinitiator component in the molten polyester component. Further details on the preparation of polyester/epoxy systems can be taken, for example, from European Patent Publication No. 0,620,259 and U.S. Patent No. 5,436,063.

The structural hybrid pressure-sensitive adhesive films and tapes used in the present invention can be unsupported or supported.

Unsupported structural hybrid pressure-sensitive adhesive tapes (often also referred to as adhesive films) comprising no backing (also termed as transfer tapes) can be obtained, for example, in case of acrylate/epoxy based tapes by mixing the epoxy component, the hardener component and, if present, additional fillers, adjuvants or other additives, with the monomeric or prepolymeric acrylate syrup and coating the resulting mixture with the desired thickness onto a first release liner such as a siliconized polyester film with subsequent photopolymerization of the acrylic component. The exposed surface of the unsupported pressure-sensitive adhesive tape may then be protected by a second release liner

Similarly, in case of polyester/epoxy based tapes the mixture comprising the molten polyester component, the epoxy component, the photoinitiator component and, if present, additional fillers, adjuvants or other additives, may be coated with the desired thickness onto a first release liner such as a siliconized polyester film, and a second release liner is subsequently laminated onto the exposed surface of the unsupported pressure-sensitive adhesive tape. Other methods can be used such as, for example, extruding the unsupported adhesive tape onto a backing which may be, for example, a release liner

Supported pressure-sensitive adhesive tapes comprise at least one backing. Depending on the respective application, the backing may be selected from a group of materials comprising polymeric films of various stiffness such as, for example, polyolefins, polyesters, polycarbonates or polymethacrylates, papers, non-wovens, laminates, one part mechanical fasteners (which are described, for example, in U.S. Patent No. 5,077,870) or metals. The thickness of the carrier layer typically varies between 25 µm and 3,000 µm, preferable between 25 and 1,000 µm. The carrier material should be selected such that both layers of the adhesive bond very strongly to it. Such a choice can be made easily and does not require any inventive input from the expert. If desired, the carrier material may be treated with chemical primers or may be corona treated.

The structural hybrid pressure-sensitive adhesive can be applied to the backing by methods identical or similar to those described above for the preparation of unsupported pressure-sensitive adhesive tapes.

The kit of parts additionally comprised a primer composition comprising one or more silane, titanate, aluminium or zircoaluminate coupling agents which are preferably dissolved in a volatile inert organic solvent.

Appropriate silane coupling agents are preferably selected from the group of compounds according to formula (III) 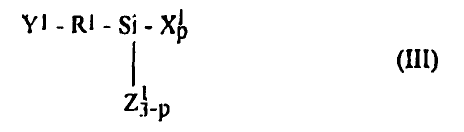 wherein X¹ independently is a hydrolyzable group such as, for example, an alkoxy group (e.g., a methoxy group, an ethoxy group, a 2-methoxyethoxy group or a 2-methoxy-2-ethoxyethoxy group), an acetoxy group or a chlorine atom, Y¹ is an organic functional group interacting with the pressure-sensitive adhesive layer such as, for example, a vinyl group, a (meth)acryloyloxy group, epoxy-containing group (e.g., a glycidoxy group, an epoxycyclohexyl group, etc.), a mercapto group, an amino group, an ureido group, a chlorine atom, an imidazolyl group or a cyano group, Z¹ is a nonhydrolyzable group such as, for example, an alkyl or aryl group, R¹ is a single bond or an alkylene group such as an ethylene or an n-propylene group, and p is 2 or 3.

X¹ preferably is methoxy or ethoxy, Y¹ preferably is (meth)acryloyloxy or an epoxy-containing group and p preferably is 3.

Silane coupling agents which are useful in the present invention include 3-chloropropyltrimethoxysilane, 3-methacryloyloxypropyltrimethoxysilane, 3-glycidoxypropyltrimethoxysilane, 3-mercaptopropyltrimethoxysilane, 3-aminopropyltrimethoxysilane, N-methyl-3-aminopropyltrimethoxysilane, N-(2-aminoethyl)-3-aminopropyltrimethoxysilane, N-[2-(N-2-aminoethyl)aminoethyl]-3-aminopropyltrimethoxysilane, 3-ureidopropyltrimethoxysilane, N-phenyl-3-aminopropyltrimethoxysilane, 3-(4,5-dihydroimidazolyl)propyltrimethoxysilane, 3-aminopropyltris(2-methoxy-2-ethoxyethoxy)silane, N-(2-aminoethyl)-3-aminopropylmethyldimethoxysilane, 3-chloropropylmethyldimethoxysilane, 3-methacryloyloxypropylmethyldimethoxysilane, 3-mercaptopropylmethyldimethoxysilane, 3-glycidoxypropylmethyldimethoxysilane, 3-chloropropylmethyldiethoxysilane, 3-aminopropylmethyldiethoxysilane, 2-(3,4-epoxycyclohexyl)ethyltrimethoxysilane, vinyltrimethoxysilane, vinyltriethoxysilane, 3-chloropropyltriethoxysilane, 3-mercaptopropyltriethoxysilane, 3-aminopropyltriethoxysilane, 3-ureidopropyltriethoxysilane, 3-cyanopropyltriethoxysilane, vinyltris(2-methoxyethoxy)silane, vinyltriacetoxysilane, vinyltrichlorosilane, 3-chloropropylmethyldichlorosilane, octadecyl[3-(trimethoxysilyl)propyl] ammonium chloride, N-[2-(N-vinylbenzyl)aminoethyl]-3-aminopropyltrimethoxysilane hydrochloride, 2-(3,4-epoxy cyclohexyl)ethyl-trimethoxysilane, and 2-(3,4-epoxy cyclohexyl)ethyl-methyl-dimethoxysilane.

The most preferred epoxysilane is 3-glycidoxypropyl-trimethoxysilane and the most preferred aminosilane is 3-aminopropyltrimethoxysilane.

Appropriate titanate coupling agents are preferably selected from the group of compounds according to formula (IV)

X²_{q}-Ti-Y²_{(4-q)} (IV)

wherein X² independently is a hydrolyzable group such as, for example, an alkoxy group (e.g., a methoxy group, an ethoxy group, an n-propoxy group, an isopropoxy group, an n-butoxy group, a sec-butoxy group or a tert-butoxy group) or an acetoxy group, or also when q is 2, a group wherein two X² groups are combined such as, for example, an oxyacetoxy group or an oxyethoxy group, Y² independently is an organic group interacting with the pressure-sensitive adhesive layer such as, for example, an acyloxy group (e.g., a (meth)acryloyoxy group, an octanoloxy group, a lauroyloxy group, an oleoyloxy group, a stearoyloxy group or an isostearoyloxy group), an aryloxy group (e.g., a p-cumylphenoxy group), an arylsulfonyloxy group (e.g., a dodecylbenzenesulfonyloxy group), an alkylphosphonoxy group (e.g , a dioctylphosphonoxy group, a dioctylpyrophosphonoxoy group) or an amino group-containing group (e.g., a 2-N-(2-aminoethyl)aminoethoxy group), and q is 0.5 to 2.

X² preferably is an isopropoxy group, an oxyacetoxy group or an oxyethoxy group.

Titanate coupling agents of formula (IV) which are useful in the present invention include isopropyl trioctanoyl titanate, isopropyl triisostearoyl titanate, isopropyl diacryloyl isostearoyl titanate, isopropyl dimethacryloyl isostearoyl titanate, isopropyl tris(dodecylbenzenesulfonyl) titanate, isopropyl tris(p-cumylphenyl) titanate, isopropyl tris[2-N-(2-aminoethyl)aminoethyl] titanate, isopropyl tris(dioctylphosphono) titanate, isopropyl tris(dioctylpyrophosphono) titanate, bis(dioctylpyrophosphono) carbonylmethylene titanate, bis(p-cumylphenyl) carbonylmethylene titanate, diisostearoyl ethylene titanate and bis(dioctylpyrophosphono) ethylene titanate.

Appropriate titanate coupling agents are furthermore preferably selected from the group of compounds according to formula (V) 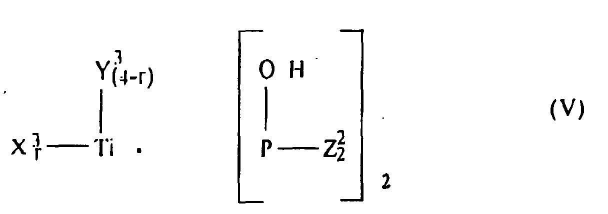 wherein X³ independently is a hydrolyzable group such as, for example, an alkoxy or substituted alkoxy group such as, for example, a methoxy group, an ethoxy group, an n-propoxy group, an isopropoxy group, an n-butoxy group, an isobutoxy group, a sec-butoxy group, a tert-butoxy group, a 2-methoxyethoxy group, a 2-ethoxyethoxy group, a 2-butoxyethoxy group, a 3-methoxypropoxy group, a 2-methoxy-2-ethoxyethoxy group or a 2-methoxy-2-ethoxy-2-ethoxyethoxy group, Y³ independently is an organic group interacting with the pressure-sensitive adhesive layer such as, for example, an alkoxy group or substituted alkoxy group such as, for example, an n-hexyloxy group, a 2-hexyloxy group, an n-octyloxy group, an isooctyloxy group, a tri decyloxy group, a stearyloxy group or a 2,2-diallyoxymethyl-1-butoxy group, an aryloxy group such as, for example, a phenoxy group or a methoxyphenoxy group, a haloalkoxy group or haloaryloxy group such as, for example, a bromomethoxy group, a chloroethoxy group or a chlorophenoxy group, Z² independently is an alkoxy group such as, for example, a methoxy group, an ethoxy group, an n-propoxy group, an isopropoxy group, an n-butoxy group, an isobutoxy group, a sec-butoxy group, a tert-butoxy group, an n-hexyloxy group, an n-octyloxy group, an isooctyloxy group, a decyloxy group, a lauryloxy group, a tridecyloxy group or a stearyloxy group, a substituted alkoxy group such as, for example, a 2-methoxyethoxy group, a 2-ethoxyethoxy group, a 2-butoxyethoxy group, a 3-methoxypropoxy group, a 2-methoxybutoxy group, a 2-methoxy-2-ethoxyethoxy group or a 2-methoxy-2-ethoxy-2-ethoxyethoxy group, an aryloxy group such as, for example, a phenoxy group, a tolyloxy group, a xylyloxy group, cresyloxy group, a cumylphenoxy group or a methoxyphenoxy group, an aralkyloxy group such as, for example, a benzyloxy group, a haloalkoxy group or haloaryloxy group such as, for example, a bromomethoxy group, a chloroethoxy group, a 3-chloropropoxy group, a 2-chlorotridecyloxy group, a chlorophenoxy group or 2,4-dibromophenoxy group, and r is 0 to 4.

Titanate coupling agents of formula (V) which are useful in the present invention include tetramethyl bis(diphenyl phosphite)titanate, tetraethyl bis(dibenzyl phosphite)titanate, tetraisopropyl bis(dioctyl phosphite)titanate, tetraisopropyl bis(dilauryl phosphite)titanate, tetraisopropyl bis[di(methoxyphenyl)phosphite]titanate, tetraisopropyl bis[di(cumylphenyl) phosphite]titanate, tetraisobutyl bis(ditolyl phosphite)titanate, tetra-tert-butyl bis(dixylyl phosphite)titanate, tetrahexyl bis(dilauryl phosphite)titanate, tetraoctyl bis(dioctyl phosphite)titanate, tetraoctyl bis(dilauryl phosphite)titanate, tetraoctyl bis(ditridecyl phosphite)titanate, tetraoctyl bis(dicresyl phosphite)titanate, tetra(3-methoxypropyl) bis(dioctyl phosphite)titanate, tetra(2-methoxy-2-ethoxyethyl) bis[di(2-chlorotridecyl) phosphite]titanate, tetra(2-methoxy-2-ethoxy-2-ethoxyethyl) bis(dicresylphosphite) titanate, tetra(2-butoxyethyl) bis(di-3-chloropropyl phosphite)titanate, tetra[(2,2-diallyloxymethyl)butyl] bis(ditridecyl phosphite)titanate, methyl hexyl(2-ethoxyethyl)isooctyl bis[(2,4-dibromophenyl) n-hexyl phosphite]titanate, tetraphenyl bis(dibutyl phosphite)titanate, dimethyl diphenyl bis(diisopropyl phosphite)titanate, tetra(methoxyphenyl) bis(dibutyl phosphite)titanate, tetra(chloroethyl) bis(octyl decyl phosphite)titanate, tetra(chlorophenyl) bis(dilauryl phosphite)titanate and tetra(bromoethyl) bis[(di(methoxybutyl) phosphite]titanate.

Appropriate aluminium coupling agents are preferably selected from the group of compounds of formula (VI) 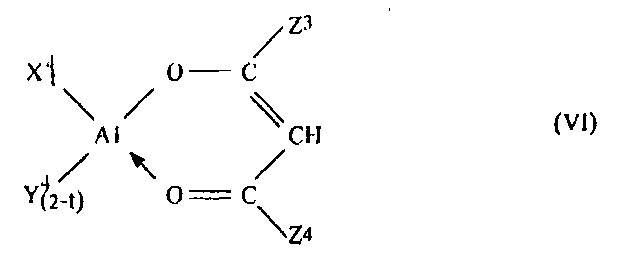 wherein X⁴ independently is a hydroxyl group or a hydrolyzable group such as, for example, an alkoxy group such as a methoxy group, an ethoxy group, an n-propoxy group, an isopropoxy group, an n-butoxy group, an isobutoxy group, a sec-butoxy group or a tert-butoxy group, Y⁴ independently is an organic group interacting with the pressure-sensitive adhesive such as, for example, an acyloxy group such as, for example, a (meth)acryloyloxy group, an acetacetoxy group, an octanoyloxy group, a lauroyloxy group, an oleoyloxy group, a stearoyloxy group, an isostearoyloxy group or a 1-amino-(N-lauroyloxy)propionyloxy group, an alkoxysulfonyloxy group such as, for example, a lauryloxysulfonyloxy group, an alkylsulfonyloxy group such as, for example, a methylsulfonyloxy group, an arylsulfonyloxy group such as, for example, a dodecylbenzenesulfonyloxy group, an alkylphosphonoxy group such as, for example, a dibutylphosphonoxy group, a diocylphosphonoxy group or a dioctylpyrophosphonoxy group, and t is 0.5 - 2

Z³ and Z⁴ are independently selected from a group of substituents comprising, for example, an alkyl group, an aryl group, an alkoxy group, an alkenyloxy group and substituted amino groups.

Aluminium coupling agents of formula (VI) which are useful in the present invention include, for example, diisopropylate aluminium oleylacetoacetate, isopropylate acrylate aluminium oleylacetoacetate, isopropylate acetoactate aluminum oleylacetoacetate, isopropylate dubutyl phosphate aluminum oleylacetoacetate, isopropylate dibutyl pyrophosphate aluminum oleylacetoacetate, isopropylate dodecylbenzene sulfonate aluminum oleylacetoacetate, and isopropylate lauryl sulfate aluminum oleylacetoacetate.

Appropriate zircoaluminate coupling agents are preferably selected from the group of compounds of formula VII 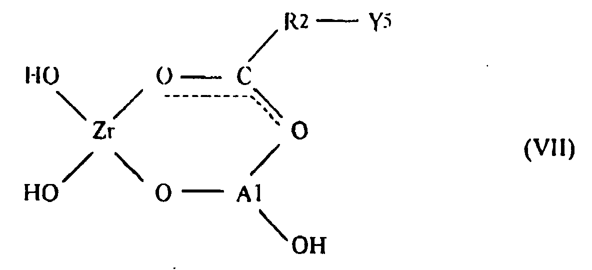 wherein Y⁵ is an organic group interacting with the pressure-sensitive adhesive layer such as, for example, an amino group, a carboxyl group, a (meth)acryloyoxy group, an 1-methylvinyl group, a mercapto group, an acyloxy group and a dodecyl group, and R² is a single bond or an alkylene group of C₁ to C₁₈ such as, for example, an ethylene group, an n-butylene group or an n-dodecylene group.

Zircoaluminate coupling agents of formula (VII) which are useful in the present invention include, for example, 2-aminopropionyl zircoaluminate, 2-carboxypropionyl zircoaluminate, myristoyl zircoaluminate, methacryloyl zircoaluminate and 2-mercaptopropionyl zircoaluminate.

The term "interacting with the structural hybrid pressure-sensitive adhesive" used above and below means that the respective group has an affinity for or chemically reacts with the structural hybrid pressure-sensitive adhesive.

The primer preferably comprises 1-5 more preferably 1-4 and especially preferably 1-3 primer compounds selected from the group consisting of silane, titanate, aluminum and zircoaluminate coupling agents. Especially preferred are primers comprising at least 75 wt. %, more preferably at least 8.5 wt. %, and especially preferably at least 95 wt. % with respect to the mass of the primer composition of one or more silane coupling agents.

The coupling agents useful in the present invention can be prepared by methods described, for example, in Silane Coupling Agents, 2nd ed., New York 1991, edited by Edwin P. Plueddemann, pp. 32-54. Suitable coupling agents are also commercially available, for example, from Union Carbide Corp., Danbury, CT. U.S.A., Dynamit Nobel of America, Inc., Rockleigh, NJ, U.S.A., Dow Corning Corp., Midland, MI, U.S.A., SCM Corporation, Jacksonville, FL, U.S.A., Degussa AG, Hanau, Germany or OSI Specialties S.A., Meyrin, Switzerland.

The primer used in the present invention may preferably be dissolved in an inert, volatile solvent component comprising one or more solvent compounds.

Suitable solvents should be sufficiently volatile to allow evaporation of the solvent or a great part of it while drying the primer after application to the substrate surface. They also must be sufficiently inert in order not to react with the coupling agents and to allow for sufficient shelf life times of the kit of parts of the invention. It was found, for example, that the use of methylethylketone in primer systems comprising aminosilanes, result in a reduction of the shelf life time. There are a large number of organic solvents which are suitable for the present invention. Examples include aromatic hydrocarbons, like toluene or xylene, alcohols, like methanol, ethanol, or isopropanol, esters, like ethyl acetate or butyl acetate, chlorinated organic solvents, like methylene dichloride or trichloroethylene, ethers, like tetrahydrofuran or dioxane, ether-esters, like methoxybutylacetate, ketones, like acetone, methylethylketone, methylisobutylketone or diacetonealcohol, or aliphatic hydrocarbons, like hexane or mineral spirits.

The solvent component is preferably used in an amount to give a primer solution comprising between 0.1 - 20 wt.% with respect to the mass of the primer solution of one or more coupling agents.

The primers used in the present invention preferably additionally comprise one or more film-forming resins. Suitable film-forming resins for use in the preparation of the primer composition include polyacrylate resins, epoxy resins, polyester resins (polymers of a carboxylic acid and glycol), polyvinyl chloride resins, chlorinated rubbers, and ethylene-vinyl acetate copolymers. It was surprisingly found that the addition of one or more film-forming resins typically improves the adhesion of the structural hybrid pressure-sensitive adhesive tape, in particular, to glass substrates but also to other substrates such as, for example, ceramic-coated glass substrates or metal substrates. It was also found that the addition of epoxy or phenoxy resins as film-forming resins increases the shelf-life time of the primer composition when using it in connection with an appropriately selected inert solvent system.

The film-forming resin compounds preferably have a molecular weight of from about 5,000, more preferably from about 10,000, to about 30,000 or more. Preferably, the film-forming resin comprises one or more phenoxy resin and/or one or more epoxy resins. Epoxy resins and, in particular, epoxy resins with a molecular weight from ≥ 10,000 are preferred. It has surprisingly been found that with the use of phenoxy resins instead of epoxy resins better results are obtained. Phenoxy resins are thermoplastic polymers derived from biphenols, in most cases bisphenol A, and epichlorohydrin. The molecular weights of phenoxy resins are higher than those of conventional epoxy resins, and they lack terminal epoxide functionality. For the present invention it is preferred to use a phenoxy resin with a molecular weight of ≥ 20,000, more preferably of 25,000 or more, and especially preferably of 30,000 or more.

The film-forming resin compound or compounds are preferably present in an amount of at least about 5 wt. %, more preferably of at least about 10 wt. %, and especially preferably of at least about 20 wt. % with respect to the mass of the primer component, i.e. the masses of the coupling agent or agents and the film-forming resin or resins. The amount of the film-forming resins preferably does not exceed 95 wt. %, and is preferably 75 wt. % or less.

The film-forming resin compound or compounds and the coupling agent or agents are preferably dissolved in an inert, volatile solvent component comprising one or more solvents which may preferably be selected from the group of solvents listed above. The solvent is preferably used in an amount to give a primer solution comprising between 0.1 - 10 wt. %, more preferably between 0.1 and 5 wt. %, and especially preferably between 0.1 and 2 wt. % of one or more coupling agents and, in particular, silane coupling agents and between 0.1 - 20 wt. %, and more preferably between 0.5 and 10 wt. % of one or more film-forming resins, whereby the percentages refer to the mass of the primer composition including the solvent component.

In an especially preferred embodiment, the primer used in the present invention comprises
(i) 5 - 85 % by weight, preferably 10 - 70 % by weight, of one or more silane, titanate, aluminum and/or zircoaluminate coupling agents.
(ii) 95 - 15 % by weight, preferably 90 - 30 % by weight, of one or more film-forming resin compounds comprising at least one phenoxy resin with a molecular weight of 20,000 or more, preferably of 25,000 or more
   whereby the percentages refer to the sum of components (i) and (ii) and add up to 100% by weight, and
(iii) a volatile inert organic solvent component, preferably in an amount to give a primer solution between 0.1 - 10 wt.% of one or more coupling agents and between 0.1-20 wt.% of one or more film-forming resins whereby the percentages refer to the mass of the primer composition.

These especially preferred primers are new and they are subject-matter of the present invention.

The kit of parts according to the present invention allows, for example, for the preparation of assemblies comprising two substrates with, for example, an unsupported thermoset structural hybrid adhesive tape being sandwiched and bonded between these substrates. While coupling agents heretofore have been incorporated into the bulk of structural hybrid pressure-sensitive adhesives, it was found by the present inventors that applying the primer composition to the surface of the substrate typically results in an increased weather resistance of assemblies comprising thermoset structural hybrid pressure-sensitive adhesive tapes without adversely affecting or deteriorating to an unacceptable degree, respectively, the 90° peel adhesion of the non-thermoset structural hybrid pressure-sensitive adhesive tape to a wide range of surfaces. This finding was especially surprising for primer compositions comprising one or more film-forming resins. Applying the primer composition directly and separately from the structural hybrid pressure-sensitive adhesive tape to the surface of the substrate has the additional economical advantage that a lower amount of coupling agent is required as compared to incorporating the coupling agent(s) into the bulk structural hybrid pressure-sensitive adhesive.

The substrates are preferably selected from a group of substrates with polar surfaces comprising high energy surfaces such as metals like iron, stainless steel, aluminum or brass, semi-metals like silicon or boron, or glass, and substrates comprising low energy surfaces such as, for example, polymethyl(meth)acrylate, polycarbonate, polystyrene and acrylonitrile-butadiene styrene. Substrates exhibiting very low energy surfaces such as polytetrafluoroethylene and polyolefins such as polyethylene are not included in this group. Substrates with high energy surfaces are preferred.

Prior to applying the primer to the surface of the first substrate, it may be degreased with an appropriate solvent. Such solvents are known to a person skilled in the art and include methylethylketone (MEK), acetone, toluene, isopropanol/water and the like. Further pretreatment of the surface is usually not necessary.

The primer is then applied to the surface of the first substrate in an amount to give the desired film thickness of the primer layer on the surface of the first substrate. It is preferred to apply the primer dissolved in a solvent component comprising one or more solvent compounds, with subsequent drying. The drying time is typically between 3 and 120 min., preferably between 15 and 20 min., depending on the composition of the primer. It is believed, although the present inventors do not wish to be bound by such theory, that in order to obtain a maximum bond strength it is essential in some cases to control the drying time for several reasons. For a most effective interaction between the primer and the adhesive, the primer must have a relatively open structure which permits an interdiffusion between the primer and the adhesive tape subsequently applied to the primer layer. If the primer film is too intensively dried before applying the adhesive tape, it may be insufficiently penetrated by the adhesive, on the other hand, without sufficient drying, the primer may totally diffuse away from the interfacial area between the substrate and the adhesive tape into the bulk adhesive tape. The person skilled in the art can easily optimize the drying time with respect to the requirements of a specific application.

In case the second substrate also exhibits a high energy surface, a primer used in the present invention may also be applied to this surface using a method which is identical or similar to the method described above. Subsequent to the pretreatment of one or both surfaces an appropriately selected adhesive tape is sandwiched between the substrates.

Depending on the nature of the component effecting thermosetting, the thermosetting reaction can be initiated, for example, by exposing the structural hybrid pressure-sensitive adhesive tape to heat and/or to activatable actinic radiation (i.e., radiation having a spectrum in the UV or VIS spectral regtions which at least partly overlaps the absorbence spectrum of the photoinitiator compounds) or electron beam radiation. The crosslinking reaction initiated by heat and/or actinic and/or electron beam radiation is termed above and below as thermosetting reaction.

Photocrosslinking is preferably effected by using actinic radiation having a wavelength in the ultraviolet or visible spectral regions. Suitable sources of actinic radiation include mercury, xenon, carbon arc, tungsten filament lamps, sunlight, etc. Ultraviolet radiation, especially from a medium pressure mercury arc lamp, is most preferred. Exposure times may be from less than about 1 second to 10 minutes or more (to provide a total energy exposure of typically between 25 and 5,000 mJ/cm² of UV-A energy measured by an appropriate photo detection device such as those obtained from EIT (Sterling, Virginia) and calibrated according to N.I.S.T. (National Institute of Standards and Technology) standards) depending on both the amount and the type of reactants involved, the energy source, the distance from the energy source, the thickness of the adhesive tape, and the desired after-cure handling time.

Photocrosslinking pressure-sensitive adhesive tapes may also be cured by exposure to electron beam radiation. The dosage necessary is generally from less than 1 megarad to 100 megarads or more. The rate of curing tends to increase with increasing amounts of initiator at a given energy exposure. The rate of curing also increases with increased energy intensity.

In case of photocrosslinking, the structural hybrid pressure-sensitive adhesive tape may be subjected to actinic or e-beam radiation prior to or after attaching it to the first substrate. The after-cure handling time depends on the properties of the structural hybrid pressure-sensitive adhesive used, the dose and geometry of irradiation, the thickness of the structural hybrid pressure-sensitive adhesive tape, the substrates and the desired properties of the assembly. The after-cure handling time may vary from one second up to 2 hours and is preferably between 2 and 15 minutes and more preferably between 2 and 5 minutes. Subjecting the structural hybrid pressure-sensitive adhesive tape to actinic or e-beam radiation prior to attaching it to the first substrate is often preferred because it allows for activation of both sides of the structural hybrid pressure-sensitive adhesive tape which often results in more homogeneously crosslinked structural hybrid pressure-sensitive adhesive tapes. In case of substrates which are, for example, transparent to actinic radiation, the structural hybrid pressure-sensitive adhesive tape may first be sandwiched between the substrates and then irradiated.

In case of thermal crosslinking the structural hybrid pressure-sensitive adhesive tape is preferably sandwiched between the two substrates first and then held at an elevated temperature for a time period of typically between 10 seconds and 2 hours. The crosslinking temperature depends on the specific properties of the structural hybrid pressure-sensitive adhesive such as, for example, the onset temperature of the curing reaction, and the temperature stability of the respective substrates, and it may vary between 40 - 250°C and, in particular, between 70 - 200°C.

In another preferred embodiment of the present invention, the primer is applied as a primer layer to the exposed surface of the structural hybrid pressure-sensitive adhesive layer. The primer is preferably applied dissolved in a solvent component, and various methods such as dipping, for example, an unsupported structural hybrid pressure-sensitive adhesive layer into the primer solution, spray coating or printing may be used. The thickness of the layer of the primer solution is selected so that the thickness of the dried primer layer is between 20 nm and 5 µm, preferably between 20 nm and 500 nm. The primer layer is preferably applied to give a dry coating weight of between 0.02 g/m² and 10 g/m².

In case of a primer layer applied to the structural hybrid pressure-sensitive adhesive layer, the primer composition preferably comprises only a low amount of a film-forming resin of less than 15 wt.% and more preferably of less than 5 wt.% with respect to the sum of the masses of the coupling agent(s) and the film-forming resins. In this embodiment, the primer composition preferably comprises no film-forming resin(s) because it was found that the film-forming resin(s) adversely affect the 90° peel adhesion of the "paint-on" tape when applied to various surfaces after a prolonged storage time of, for example, 1 or more weeks thus decreasing the shelf life time of the paint-on tape to an unacceptable degree, and/or deteriorate the overlap shear strength of assemblies comprising a thermoset paint-on tape

Drying is effected by maintaining the structural hybrid pressure-sensitive adhesive tape bearing at least one primer layer on an exposed pressure-sensitive adhesive surface, optionally at an elevated temperature of between 30 °C and 70 °C for a time period of typically between 15 sec and 15 min. Alternatively, it is possible to dry the primer layer by subjecting it to hot air flow. The drying conditions and the dry time are preferably selected in order to provide primer layers with a relatively open structure to allow for a strong interaction between the primer surface and the surface of the substrate.

The primer layer or layers can be protected by release liners such as siliconized polyethylene terephthalate films and stored, for example, in form of rolls prior to use.

The structural hybrid pressure-sensitive adhesive "paint-on" tape can be directly used to adhere two substrates thus eliminating the need to firstly apply a primer layer to the substrate followed by adhering a structural hybrid pressure-sensitive adhesive tape. The substrates may be cleaned and/or degreased, if desired, prior to applying the structural hybrid pressure-sensitive adhesive tape bearing one or more primer layers, as was described above when using the kit of parts according to the invention. The structural hybrid pressure-sensitive adhesive tape bearing one or more primer layers, may be subjected to actinic or e-beam radiation and/or heat to effect curing. E-beam and actinic radiation can be applied prior to adhering the structural hybrid pressure-sensitive adhesive tape bearing one or more primer layers to one substrate or sandwiching it between the two substrates, respectively, within the after-cure time, but it is also possible to adhere the tape to one substrate first followed by e-beam or actinic irradiation, respectively. In case of one or two transparent substrates, curing may also be effected after the structural hybrid pressure-sensitive adhesive tape has been sandwiched between the two substrates. Thermal curing is usually performed by sandwiching the structural hybrid pressure-sensitive adhesive tape between the substrates first and then maintaining the assembly at an elevated temperature of typically between 40 - 250°C, in particular 80 - 200°C for a period of time of between 10 seconds and 2 hours.

When preparing an assembly comprising two substrates and a structural hybrid pressure-sensitive adhesive bearing one or more primer layers and subsequent curing of the adhesive layer, the same methods and conditions as described above in case of using the kit of parts, can be applied.

Surprisingly, it was found that the structural hybrid pressure-sensitive adhesive tapes bearing one or more primer layers, can be stored prior to use and have a shelf-life time of at least 4 weeks and, in particular, 5 weeks. The term shelf-life time denotes the period of time after which the ratio of the 90° peel adhesion from stainless steel over the initial 90° peel adhesion from stainless steel is not less than 0.5 and, in particular, not less than 0.6. In each case, the 90° peel adhesion from stainless steel is measured after applying the tape to the stainless steel substrate and immersing the resulting construction into water (70 °C, containing 0.5 Pril™ detergent) as is described in the test section below.

The structural hybrid pressure-sensitive adhesive tapes according to the present invention bearing one or more primer layers allow for the preparation of assemblies with advantageous properties and they are easy to handle. Therefore these adhesive tapes according to the present invention bearing one or more primer layers are preferred over the kit of parts according to the present invention for a wide range of applications.

The assemblies which are obtainable by using the kit of parts or the structural hybrid pressure-sensitive adhesive "paint-on" tape according to the invention, respectively, bearing one or more primer layers, with subsequent curing exhibit desirable mechanical properties such as overlap shear strength, impact resistance and cured peel adhesion. The favorable mechanical properties are not adversely affected when exposing the samples to outdoor conditions or decrease only to a minor and/or practically acceptable degree. The assemblies according to the present invention are, in particular, characterized by an excellent resistance against moisture and water.

Due to these favorable properties the kit of parts, the structural hybrid pressure-sensitive adhesive paint-on tape bearing one or more primer layers and the assemblies according to the present invention can be used for a wide range of applications and, in particular, for outdoor applications such as , for example, in the construction or automotive industry.

The invention is further illustrated by the following, non-limiting examples. First, however, certain procedures and tests, utilized in the examples, will be described. The first group I of Experiments relates to the use of the kit of parts whereas a second group II relates to the use of structural hybrid pressure-sensitive adhesive paint-on tapes bearing one or more primer layers.

### I. Kit of parts

### I.1 Test Methods

### Overlap Shear

A dynamic overlap shear test was performed to evaluate the strength of the thermoset adhesive bond prepared using the kit of parts of the present invention. Two substrates, stainless steel and glass, were evaluated and adhesive bond strength was measured initially and after immersion in hot water.

### a) Stainless Steel, Initial Value

Two stainless steel coupons (grade 1.4301 x5 CrNi 18 10), measuring 2.54 cm x 10 cm and having a thickness of 2 mm, were degreased with methyl ethyl ketone. In some instances (indicated in the data tables), the stainless steel plate was abraded with a Scotchbrite™ 7447 scouring pad to roughen the surface and improve adhesion. The plates were cleaned further with isopropanol/water (1:1) and again degreased with methyl ethyl ketone.

The primer described below was applied to the stainless steel surface by passing a tissue soaked in the primer solution over the surface of the stainless steel coupon once. The plates thus treated were allowed to dry for 45 minutes at 23 °C at a relative humidity of between 50 % and 60 %.

A rectangular section of a crosslinkable, epoxy/acrylate based structural hybrid pressure-sensitive adhesive tape, available as Structural Bonding Tape 9245 from Minnesota Mining and Manufacturing Company, St. Paul, Minnesota, having the dimension of 2.54 cm x 1.27 cm was used to bond two steel coupons together in a configuration described in ISO 4587 (Single overlap shear test). The steel coupons were placed in a heated press for one hour at 140°C to allow the tape to cure. The adjusted pressure resulted in 0.1 N/mm² in the bonded areas.

After curing the samples were stored 24 days at ambient conditions and were then tested at room temperature, using a tensile tester where the jaws were moved apart at a speed of 5 mm/min. The force required to break the adhesive bond was recorded in N/mm². Each experimental value was determined four times and the results averaged.

### b) Stainless Steel, After Water Immersion

Samples were prepared and tested as described above, with the exception that the stainless steel coupons bonded by the cured adhesive were immersed in a water bath heated to 70°C for 24 days. The water bath contained 0.2% Pril™ detergent. The samples were allowed to cool in the water to 23°C before overlap shear was measured.

### c) Glass

The overlap shear test was performed using float glass as a substrate. Glass sheets having the dimensions of 8 cm x 2.54 cm x 6 mm were cleaned with methyl ethyl ketone and 1:1 isopropanol/water.

The glass sheets were primed on the float side by passing a tissue soaked in the primers described below over the glass surface one time and then allowing the primer layer to dry for 45 minutes at 23°C and 50% relative humidity.

Primed glass sheets were then bonded together in the overlap shear configuration similarly as with the stainless steel coupons using a rectangular section of the crosslinkable, epoxy/acrylate based pressure-sensitive adhesive tape, available as structural hybrid pressure-sensitive adhesive tape 9245 from Minnesota Mining and Manufacturing Company, St. Paul, Minnesota, having the dimension of 2.54 cm x 1.27 cm. The bond thus prepared was then cured in a heated plate press at 140 °C for 60 min while a pressure of 0.1 N/mm was being exerted on the bonded areas.

After curing, the samples were stored 24 days at ambient conditions and were then tested at room temperature, using a tensile tester where the crosshead speed was set at 5 mm/min and tests were made in the pressure mode, indicating that the jaws of the tensile tester were forcefully moved together to effect bond breakage.

Each test was performed on four separately prepared samples and the results averaged and recorded in N/mm².

### d) Glass, After Water Immersion

Samples were prepared and tested as described above for glass as a substrate, with the exception that the bonded glass sheets were immersed in a water bath containing 0.2% Pril™ detergent for 24 days at 70°C. The samples were allowed to cool in the water to 23°C before testing.

### Maximum Cleavage Strength

A stainless steel substrate and a glass sheet were bonded together using structural hybrid pressure-sensitive adhesive tapes and primers of the invention. The bond was broken by applying force to one of the bonded elements in a cantilever fashion to indicate the ability of the adhesive bond to perform in mounting of heavy objects to vertical surfaces, for example.

A rectangular sheet of float glass was degreased with methylethylketone and isopropanol/water 1:1 and treated with primers described below on the bath side. Primer was applied by wiping the glass surface once with the primer solution and allowing the solution to dry for 45 min at 23°C.

A rectangular bracket having a smooth stainless steel surface (AISI 316L) was degreased and primed using the same methods as for the glass.

The two differing substrates were then bonded together using a rectangular section of structural hybrid pressure-sensitive adhesive tape 9245 from Minnesota Mining and Manufacturing Company, St. Paul, Minnesota, having the dimensions of 26 mm x 23 mm. The bond thus prepared was cured at 140°C for 90 minutes, while a pressure of 0.1 N/mm² was exerted on the bonded area.

A lever arm was inserted into the bracket in such a fashion that it extended perpendicular to the bonding plane. While the glass surface was held stationery, force was applied to the lever arm attached to the steel bracket, at a distance of 7 cm along the lever arm. The test was performed using a tensile tester with a crosshead speed of 2.5 mm/min. The maximum force required to break the bond was recorded in N. Each test was made three times and the results averaged.

### 90 ° Peel Adhesion front Stainless Steel

A single stainless steel coupon (grade 1.4301 x5 CrNi 18 10), 20 cm x 2.5 cm x 0.5 mm was washed with methyl ethyl ketone and allowed to dry. Primer as described below was applied to the steel surface by wiping the surface once with a tissue soaked in the primer solution. The primer-coated steel was allowed to dry at 23°C for 45 minutes.

After removal of one protective liner, a section of structural hybrid pressure-sensitive tape 9245 from Minnesota Mining and Manufacturing Company, St. Paul, Minnesota, having length and width dimensions corresponding to those of the steel coupon was applied to the steel substrate by hand then pressed down with thumb pressure. A 1 cm section of liner was allowed to remain in place at the shorter edge of the coupon, so that the tape could easily be grasped to evaluate the strength of the bond at a later time.

A second protective liner was allowed to remain in place on the second surface of the bonding tape which was not bonded to a substrate.

The crosslinkable pressure-sensitive adhesive tape bonded to a single steel coupon was cured at 140°C for 1 hour and allowed to cool to room temperature. The remaining liner was removed, exposing the second adhesive surface. The laminated steel was then immersed in a water bath containing 0.5% Pril™ detergent at 70°C for 6 days.

Samples were removed from the water bath and allowed to cool for approx. 1 minute. The unbonded tape end was grasped in one hand and the steel plate in the other hand. An attempt was made to separate the bonding tape from the stainless steel substrate in a manner roughly approximating a 90° peel adhesion test.

Ease of removal was classified subjectively as:
1. Poor adhesion, no effect of primer observed
2. Light adhesion, some improvement as compared to control samples without primer
3. Moderate adhesion, some residue on steel substrate after peeling
4. Good bonding, difficult to peel by hand, residue on steel substrate
5. Excellent bonding, not removable without cohesive failure of the adhesive mass.

### 90 ° Peel Adhesion from Glass

Samples were prepared and tested as described above, with the exception that glass sheets having the dimensions 20 cm x 2.54 cm having a thickness of 4 mm were employed as a substrate.

### I.2 Examples

### Example 1

Primer 1 having the following composition:
100 parts toluene
30 parts methanol
10 parts PKHJ resin (phenoxy resin with a molecular weight of 30,000, available from PAI Associates, Rock Hill, S.C., USA)
1 part g-Aminopropyltrimethoxysilane, available as Silquest A-1110 from OSi Specialties S.A., CH-1217 Meyrin)
was prepared by mixing the film forming phenoxy resin with the solvents until a homogenous solution was obtained. Then the silane coupling agent was added and the resulting primer was kept in a closed container at 23 °C over molecular sieves (3Å).

The primer thus obtained was used in connection with structural hybrid pressure-sensitive adhesive tape 9245 from Minnesota Mining and Manufacturing Company, St. Paul, Minnesota, as a kit of parts. The results of the tests as described above are given in table 1.

### Example 2

Sika 210T primer which comprises an epoxy silane and an epoxy film forming resin, and which is commercially available from Sika Chemie GmbH, D-70439 Stuttgart, was used in connection with structural hybrid pressure-sensitive adhesive tape 9245 from Minnesota Mining and Manufacturing Company, St. Paul, Minnesota, as a kit of parts. The results of the tests as described above are given in table 1.

### Comparative Example C1

Structural hybrid pressure-sensitive adhesive tape 9245 from Minnesota Mining and Manufacturing Company, St. Paul, Minnesota, was used without treating the substrate with a primer. The results of the tests as described above are given in table 1 under C1.

**Table 1**

| **Ex.** | **Primer** | **Shear (****SS**^{**1**}**), N/mm**^{**2**} | **Shear, (****SS**^{**1**}**, H**_{**2**}**O), N/mm**^{**2**} | **Shear (glass), N/mm**^{**2**} | **Shear (glass, H**_{**2**}**O), N/mm**^{**2**} |
|---|---|---|---|---|---|
| C1 | ---- | 13.0 (mf) | 3.1 (af) | > 10 ∗ | 1.2 |
| 1 | 1 | 13.4 (mf) | 9.9 (bf1) | > 10 ∗ | > 7.6 ∗ |
| 2 | 2 | 13.5 (mf) | 12.1 (bf2) | > 10 ∗ | > 10 ∗ |

| | | | | | |
|---|---|---|---|---|---|
| SS¹ Stainless steel coupons were lightly abraded with a Scotchbrite™ scouring pad before priming and bonding | | | | | |
| ∗ glass breakage before bond failure | | | | | |
| af adhesion failure mode, no adhesive residuals visible by the naked eye | | | | | |
| mf boundary layer failure mode mixed with cohesive failure mode | | | | | |
| bf1 thin boundary layer failure mode; light adhesive residuals on primer | | | | | |
| bf2 thick boundary layer failure mode; adhesive residuals on primer | | | | | |

The shear values were measured on stainless steel and glass, respectively, prior to immersion in water (stainless steel and glass, respectively) and after immersion in water (stainless steel, H₂O and glass, H₂O, respectively).

### Examples 3 - 12

The primers of Examples 3-12 were prepared according to the method described in Example 1. The compounds used in the respective primers are listed below and the composition of the respective primers is given in table 2. In Example 12 the commercially available primer composition P-C5 was used. The primer compositions of Examples 3-12 and structural hybrid pressure-sensitive adhesive tape 9245 were used in each case as kits of parts and tested according to the test methods described above. The test results are summarized in table 3.

### Silane Coupling Agents

- S1g: Aminopropyltrimethoxysilane, available as Silquest A-1110, from OSi Specialties S.A., CH-1217 Meyrin
- S2: Mixture containing the following silanes: 90 % Bis-(g-trimethoxysilylpropyl)amine, 5 % g-Aminopropyltrimethoxysilane, 5 % Tris(trimethoxysilylpropyl)amine), available as Silquest A-1170, from OSI Specialties S.A., CH-1217 Meyrin
- S3: Glycidyloxypropyltrimethoxy silane (A-187; G6720) from ABCR, D-76185 Karlsruhe
- S4: (3,4-Epoxycyclohexyl)ethyltriethoxysilane Si 242 from Degussa, D-Hanau-Wolfgang

### Film Forming Resins

- R1: Phenoxy resin PKHJ (mol. weight 30,000), available from PAI Associates, Rock Hill, S.C.
- R2: Epoxy resin, available as Beckopox EP 307 from Hoechst, Hamburg, Germany. (Seven repeat units, epoxy at each end. MW calculated to be about 2,300.)

### Commercially Available Primer

- P-C5: Solvent based amino silane primer, available as Scotch Weld™ 3901 from Minnesota Mining and Manufacturing Company, St. Paul, Minnesota

### Solvents

- L1: 1 part toluene, 1 part methylethylketone, 1 part acetone
- L2: 100 parts toluene, 30 parts methanol

### Other

Dibenzoylperoxide, >97%; moistened with water (25%), available from FLUKA Chemie AG, Buchs, Switzerland.

**Table 2**

| **Primer Compositions** | | | | | |
|---|---|---|---|---|---|
| | **Resin, parts** | **Silane, parts** | **Other, parts** | **Solvent, type (solv./solids)** | **1 month stability (Y/N)** ******^{**)**} |
| 3 | R1 (91) | S2 (9) | -- | L2 (12:1) | Y |
| 4 | R1 (91) | S3 (9) | -- | L2 (12:1) | Y |
| 5 | R1 (91) | S4 (9) | -- | L2 (12:1) | Y |
| 6 | R1 (80) | S2 (10), S3 (10) | -- | L1 (8.2:1) | N *⁾ |
| 7 | R1 (80) | S2 (10), S3 (10) | -- | L1 (3.5:1) | N *⁾ |
| 8 | R1 (75) | S2 (10.5), S3 (10.5) | Dibenzoyl peroxide (4) | L1 (3.5:1) | N *⁾ |
| 9 | R2 (91) | S3 (9) | -- | L2 (12:1) | Y |
| 10 | -- | S1(100) | -- | L2 (140:1) | Y |
| 11 | -- | S2 (33), S3 (67) | -- | L1 (50:1) | N *⁾ |

| | | | | | |
|---|---|---|---|---|---|
| *⁾ insufficient stability due to the presence of methylethylketone in the solvent | | | | | |
| **⁾ as assessed by the optical appearance of the primer after one month | | | | | |

**Table 3**

| **Test Results** | | | | |
|---|---|---|---|---|
| Ex. | Shear (SS¹), N/mm² | Shear (SS¹, H₂O), N/mm² | 90° Peel (SS) | 90° Peel (glass) |
| 3 | -- | -- | 5 | -- |
| 4 | -- | -- | 4 | -- |
| 5 | -- | -- | 4 | -- |
| 6 | 11.4 (mf) | 9.4 (bf2) | 3 | 5 |
| 7 | -- | -- | 5 | 5 |
| 8 | -- | -- | 5 | 5 |
| 9 | -- | -- | 2 | -- |
| 10 | -- | -- | 3 | -- |
| 11 | -- | -- | 4 | 4 |
| 12 | -- | -- | 4 | -- |

| | | | | |
|---|---|---|---|---|
| SS¹ Stainless steel coupons used in the shear measurements were lightly abraded with a Scotchbrite™ scouring pad before priming and bonding. | | | | |

### II. Crosslinkable Pressure-Sensitive Adhesive Tapes Bearing a Primer Layer

### II.1 Test Methods

### Floating Roller Peel Test

An aluminum foil of the dimensions 25 cm x 12.5 cm x 0.1 mm (pure aluminum, one surface anodized) was laminated with the anodized surface to the crosslinkable pressure-sensitive adhesive tape bearing two primer layers described below (primed structural hybrid pressure-sensitive adhesive tape 9245) of the same width, after one of the two liners was removed. The two parts were pressed together with striking a squeegee across the tape. After removing the second liner, the laminate was bonded to a stainless steel coupon (grade 1.4301 x 4 CrNi 18 10) of the dimensions 20 cm x 2.5 cm x 0.5 mm after it was washed with methyl ethyl ketone and was allowed to dry. The whole laminate was pressed together by striking the squeegee across the aluminum foil. After 24 hours dwell time, the peel strength was measured with the tensile test machine with a cross head speed of 100 mm/min (floating roller peel test; close to ISO 4578). The peel strengths F/b (F = force measured, b = tape width) is measured in N/mm.

### 90 ° Peel Adhesion from Stainless Steel

A single stainless steel coupon (grade 1.4301 x5 CrNi 18 10), 20 cm x 2..5 cm x 0.5 mm was washed with methyl ethyl ketone and allowed to dry.

After removal of one protective liner, a section of the primed structural hybrid pressure-sensitive adhesive tape 9245 described below, having length and width dimensions corresponding to those of the steel coupon was applied to the steel substrate by hand then pressed down with thumb pressure. A 1 cm section of liner was allowed to remain in place at the shorter edge of the coupon, so that the tape could easily be grasped to evaluate the strength of the bond at a later time.

A second protective liner was allowed to remain in place on the second surface of the bonding tape which was not bonded to a substrate.

The tape bonded to a single steel coupon was cured for 4 minutes at 100 °C and then at 140 °C for 1 hour and allowed to cool to room temperature. The remaining liner was removed, exposing the second adhesive surface. The laminated steel coupon was then immersed in a water bath containing 0,5% Pril™ detergent at 70 °C for 6 days.

Samples were removed from the water bath and allowed to cool for approx. 1 minute. The unbonded tape end was grasped in one hand and the steel plate in the other hand. An attempt was made to separate the bonding tape from the stainless steel substrate in a manner roughly approximating a 90 ° peel adhesion test.

Ease of removal was classified subjectively as:
1. Poor adhesion, no effect of primer observed
2. Light adhesion, some improvement as compared to control samples without primer
3. Moderate adhesion, some residue on steel substrate after peeling
4. Good bonding₁ difficult to peel by hand, residue on steel substrate
5. Excellent bonding, not removable without cohesive failure of the adhesive mass

### Overlap Shear Strength

### a) Stainless Steel, Initial Value

Single overlap shear specimen were made out of stainless steel coupon (grade 1.4301 x 5 CrNi1810) measuring 2.54 cm x 10 cm and having a thickness of 2 mm. The surface was washed with methyl ethyl ketone and heptane and allowed to dry.

Circles of 20 mm diameter were cut out of the primed structural hybrid pressure-sensitive adhesive tape 9245 described below. After liner removal, the circle was bonded to a coupon, close to one shorter edge. The tape was pressed down with the thumb.

After removal of the second liner, the second coupon was laminated to the coupon having the tape circle on it, as described in ISO 4587. Then the panels were pressed together with a lever arm equipment, generating a load of approximately 50 kg, for 1 second.

After 2 hours, the samples were cured between two heated plates which pressed the constructions together so that a tape thickness of 0.4 mm was generated. Because of the initial thickness of 5 mm, the diameter of the bonded area was expanded to 23 mm by this process. The samples were left in this state for 30 minutes at a temperature of 140 °C.

After curing, the samples were allowed to acclimate for 24 hours and were then tested at room temperature, using a tensile tester where the jaws were moved apart at a speed of 5 mm/min. The force required to break the adhesive bond was recorded in N/mm². Each experimental value was determined three times and the results averaged.

### b) Stainless Steel, After Water Immersion

Samples were prepared and described above, with the exception that the stainless steel coupons bonded by the cured adhesive were immersed in a water bath heated to 70 °C for 28 days. The water was deionized water and contained 0.5 % by volume Pril™ detergent. The samples were allowed to cool to 23 °C before overlap shear was measured.

### II.2 Examples

### Example 13 and Comparative Example 2

A primer comprising the following compounds
64 parts toluene
35 parts methanol
2 parts g-Aminopropyltrimethoxysilane, available as Silquest A-1110 from OSi Specialties S.A., CH-1217 Meyrin)
was prepared by mixing the silane coupling agent with the solvents until a homogenous solution was obtained and storing the solution over molecular sieves (3Å). The resulting primer was kept in a closed container at 23 °C.

Structural hybrid pressure-sensitive adhesive tape 9245 was coated with the primer as prepared above from both sides. This was done with a tissue which was dipped into the primer solution. First the open surface of the unwound tape was coated and was covered by a siliconized polyester liner three minutes after priming. Then the siliconized paper liner was removed, the second tape surface was coated and was again covered by a second siliconized polyester liner three minutes later. In this state the tape remained for a certain time (in the following referred as "storing time"). Structural hybrid pressure-sensitive adhesive tape 9245 bearing a primer layer on both sides, is termed above and below as primed Structural Bonding Tape 9245 from Minnesota Mining and Manufacturing Company, St. Paul, Minnesota.
**a)** Primed structural hybrid pressure-sensitive adhesive tape 9245 was stored for 5 weeks and then subjected to the floating roller peel test. In Comparative Example 2 an untreated structural hybrid pressure-sensitive adhesive tape 9245 was subjected to the floating roller peel test. The results are summarized in table 4.

**Table 4**

| **Ex.** | **Peel Strength** |
|---|---|
| 13 | 2.3 N/mm |
| C2 | 3.0 N/mm |

Table 4 shows that the peel adhesion of the printed structural hybrid pressure-sensitive adhesive tape 9245 has decreased by about 25 % in comparison to the untreated Structural Bonding Tape 9245, what is acceptable, however, for most applications.
**b)** After storing times of 1 week and 5 weeks, respectively, open face peel specimens were made of the primed and unprimed, respectively, structural hybrid pressure-sensitive adhesive tape 9245 and were immersed in deionized water of 70 °C containing 0.5 % Pril™ detergent for 4 days. Thereafter, a 90 ° peel test was done. The results are summarized in table 5.

**Table 5**

| **Ex.** | **Peel Adhesion After** | |
|---|---|---|
| | **1 Week Storing** | **5 Weeks Storing** |
| 13 | 5 | 3 |
| C2 | 1 | 1 |

**c)** Overlap shear strength was measured on stainless steel before and after water immersion, respectively, according to the test methods described above for the primed and unprimed, respectively, structural hybrid pressure-sensitive adhesive tape 9245. The results are summarized in table 6. The retention gives the ratio of the overlap shear strength value after water immersion over the initial value.

**Table 6**

| **Ex.** | **Overlap Shear Sstrength (Initial Vvalue) [N/mm**^{**2**}**]** | **Overlap Shear Strength (After Water Immersion) [N/mm**^{**2**}**]** | **Retention** |
|---|---|---|---|
| 13 | 5.78 cf | 5.25 af2 | 91 % |
| C2 | 11.56 cf | 3.63 af1 | 31 % |

| | | | |
|---|---|---|---|
| af1: adhesion failure | | | |
| af2: adhesion failure with very thin residual boundary layer | | | |
| cf: cohesion failure | | | |

Numerous variations are possible within the scope of the foregoing description without departing from the invention which is defined by the accompanying claims.

## Claims

1. Kit of parts comprising a structural hybrid pressure-sensitive adhesive tape and a primer, the structural hybrid pressure-sensitive adhesive tape comprising at least one structural hybrid pressure-sensitive adhesive layer with at least one exposed surface and, optionally, a backing, wherein the structural hybrid pressure-sensitive adhesive comprises a thermosettable polymer component, a thermoplastic polymer component, and an effective amount of a heat-activatable hardener component and/or a photoinitiator component to crosslink the thermosettable polymer component, and further wherein the primer comprises one or more silane, titanate, aluminum and/or zircoaluminate coupling agents which are optionally dissolved in a volatile inert organic solvent.

2. Kit of parts according to claim 1, wherein the thermosettable polymer component comprises one or more epoxy resins and/or epoxy monomers.

3. Kit of parts according to claim 1, wherein the thermoplastic polymer component comprises one or more polymer compounds selected from the group consisting of acrylates and polyesters.

4. Kit of parts according to claim 1, wherein the primer comprises
(i) 5 to 85% by weight of one or more silane, titanate, aluminum and/or zircoaluminate coupling agents and
(ii) 95 to 15% by weight of one or more film-forming resin compounds, whereby the percentages refer to the sum of the masses of (i) and (ii) and add up to 100% by weight, and
(iii) a volatile inert organic solvent component.

5. A structural hybrid pressure-sensitive tape comprising at least one structural hybrid pressure-sensitive adhesive layer with at least one exposed surface and, optionally, a backing, and a primer layer adhered to said surface, the primer layer being obtainable by applying a primer to the surface, optionally with subsequent drying, wherein the primer and the structural hybrid pressure-sensitive adhesive are specified in claim 1.

6. Primer comprising
(i) 5 - 85% by weight of one or more silane, titanate, aluminum and/or zircoaluminate coupling agents, and
(ii) 95 - 15% by weight of one or more film-forming phenoxy resins having a molecular weight of 20,000 or more, whereby the percentages refer to the sum of components (i) and (ii) and add up to 100% by weight, and
(iii) optionally a volatile inert organic solvent component.

7. Method for preparing an assembly between two substrates using a kit as specified in claim 1, the method comprising the steps of
a) applying the primer of the kit to the surface of at least one substrate forming a primed surface with subsequent optional drying of the primer layer,
b) sandwiching the structural hybrid pressure-sensitive adhesive of the kit between the primed surface and the second substrate, the surface of which optionally being also primed, and
c) crosslinking the structural hybrid pressure-sensitive adhesive layer.

8. Method for preparing an assembly between two substrates using a structural hybrid pressure-sensitive adhesive sheet material according to claim 5, comprising the steps of
a) sandwiching the structural hybrid pressure-sensitive adhesive tape between the substrates, and
b) crosslinking the structural hybrid pressure-sensitive adhesive layer.

9. Assembly comprising two substrates which is obtainable by a method according to claim 5.

10. Assembly comprising two substrates which is obtainable by a method according to claim 8.
